# FASCICULE DE BREVET EUROPEEN

(11) **EP 4 590 572 B1**
(45) Date de publication et mention de la délivrance du brevet: **29.07.2026**
(21) Numéro de dépôt: 23767904.8
(22) Date de dépôt: 07.09.2023
(51) Int. Cl.: B62D 21/15, B62D 25/08

(54) **DISPOSITIF FORMANT MARCHEPIED D'UN VÉHICULE AUTOMOBILE**
VORRICHTUNG ZUR BILDUNG EINES TRITTBRETTS FÜR EIN KRAFTFAHRZEUG
DEVICE FORMING A RUNNING BOARD FOR A MOTOR VEHICLE

(30) Priorité: 19.09.2022 FR 2209408
(43) Date de publication de la demande: 30.07.2025
(73) Titulaire: Renault s.a.s, 92100 Boulogne Billancourt (FR)
(72) Inventeur: DOUTRELEAU, Fabrice, 76430 SANDOUVILLE (FR); MOLLON, Marc, 78640 VILLIERS-SAINT-FREDERIC (FR); RAIFFE, Bruno, 78640 VILLIERS-SAINT-FREDERIC (FR)
(86) Numéro de dépôt international: PCT/EP2023/074671
(87) Numéro de publication internationale: WO 2024/061647

(56) Documents cités:
- DE-A1- 102020 205 576
- FR-B1- 3 033 764
- US-A1- 2016 107 695
- US-A1- 2019 002 026
- US-A1- 2021 276 620

## Description

La présente invention concerne le domaine des véhicules automobiles et notamment les structures formant marchepied d'un véhicule.

Les véhicules automobiles comprennent généralement un châssis configuré pour supporter l'ensemble des composants mécaniques et la carrosserie du véhicule. Le châssis comprend deux longerons longitudinaux, une pluralité de traverses transversales disposées entre lesdits longerons, et notamment une traverse extrême avant destinée à supporter un élément de carrosserie, notamment un bouclier avant.

On connait les véhicules automobiles comprenant des marchepieds disposés de chaque côté du véhicule et comportant chacun une cavité ménagée dans le bouclier avant afin de permettre à un utilisateur de prendre appui pour accéder au pare-brise avant du véhicule.

Le marchepied doit présenter une rigidité suffisante afin de supporter le poids de l'utilisateur.

On peut citer à cet égard le document FR - B1 - 3 033 764 qui décrit un dispositif de marchepied comprenant un bouclier avant comprenant une cavité délimitée par une paroi inférieure formant une surface d'appui pour le pied d'un utilisateur. Le dispositif de marchepied comprend en outre un plateau mobile articulé sur une extrémité latérale d'une traverse avant du véhicule. Le plateau est articulé entre une position déployée en dessous de la paroi inférieure et une position escamotée lors d'un choc extérieur au véhicule.

Un tel marchepied permet de se rétracter en cas de choc, notamment avec un piéton.

Toutefois, le marchepied doit également satisfaire à la réglementation ECE42 applicable aux légers chocs latéraux. Cette réglementation prévoit l'absence de rupture, voire de déformation permanente sur le pare-chocs et notamment les supports de montage, la préservation d'étanchéité des phares, l'absence de fissure sur la peau du bouclier avant, l'absence de dommage à la structure, c'est-à-dire la caisse, la traverse avant, les longerons, etc...

Par légers chocs latéraux avant, on entend un choc survenant lorsque le véhicule roule à une vitesse comprise entre 2.5 km/h et 5km/h.

De manière générale, le marchepied doit assurer la protection des organes du véhicule en cas de léger choc latéral avant.

Ainsi, il existe un besoin d'améliorer les marchepieds de véhicule automobile.

L'objectif de l'invention est donc de pallier ces inconvénients et d'améliorer les marchepieds de véhicule automobile, afin de permettre à l'utilisateur de prendre appui pour accéder au parebrise, mais également d'assurer la protection des éléments de la structure du véhicule contre les chocs latéraux avant.

Par « choc latéral avant », on entend les chocs créés par les obstacles arrivant dans une zone située à un angle compris entre 15° et 30° par rapport au longeron correspondant.

La présente invention a pour objet un véhicule automobile comprenant au moins un longeron longitudinal s'étendant selon un axe longitudinal et une doublure reliée au longeron par un élément de liaison transversal.

Le véhicule automobile comprend au moins un dispositif de marchepied soudé directement au longeron longitudinal et à l'élément de liaison transversal.

La fixation par soudure directement au soubassement de la caisse du véhicule automobile, i.e. le longeron et un élément de liaison à la doublure avant, permet de réduire les coûts de fabrication par rapport aux solutions vissées sur la traverse extrême avant.

Avantageusement, le dispositif de marchepied comprend une embase s'étendant selon un axe compris entre 20° et 45°, de préférence égal à 30° par rapport à l'axe longitudinal.

Par exemple, le dispositif de marchepied comprend une première patte de fixation verticale s'étendant selon un axe vertical depuis un côté latéral interne de l'embase.

Avantageusement, le dispositif de marchepied comprend un renfort arrière comprenant une portion centrale s'étendant selon un axe vertical depuis un côté arrière de l'embase et au moins une première patte latérale s'étendant depuis une extrémité latérale interne de la portion centrale du renfort arrière selon l'axe longitudinal vers la première patte de fixation verticale.

De plus, grâce au renfort arrière et au renfort latéral, les efforts en cas de choc latéral extérieur sont transmis à la doublure gauche.

Avantageusement, la patte latérale interne et la première patte de fixation verticale forment ensemble une première portion de fixation au longeron longitudinal, ladite première portion de fixation au longeron étant soudée via la patte latérale interne et la première patte de fixation verticale directement au longeron, c'est-à-dire sans interface supplémentaire.

Par exemple, le renfort arrière comprend une deuxième patte latérale comprenant une première partie s'étendant à partir d'une extrémité latérale externe de la portion centrale du renfort de manière oblique au moins vers l'arrière du véhicule, par exemple selon un angle compris entre 100° et 145° par rapport à l'axe de ladite portion centrale, par exemple égal à 120 et une deuxième partie s'étendant depuis la première portion selon un axe transversal vers l'extérieur.

Avantageusement, le dispositif de marchepied comprend en outre un renfort latéral comprenant une patte externe s'étendant depuis un côté latéral de l'embase au moins selon l'axe verticale et une patte de liaison s'étendant depuis la patte externe selon l'axe transversal vers le longeron.

La deuxième partie de la patte latérale externe du renfort arrière et la patte de liaison du renfort latéral forment ensemble une deuxième portion de fixation à l'élément de liaison de la doublure avant, ladite deuxième portion de fixation étant soudée via la patte de liaison et la deuxième partie directement à l'élément de liaison de la doublure avant, c'est-à-dire sans interface supplémentaire.

Avantageusement, la première partie de la patte latérale externe du renfort arrière s'étend de manière oblique vers l'arrière et vers le haut du véhicule et dans lequel la patte externe du renfort latéral s'étend verticalement et de manière oblique vers l'arrière et vers le haut du véhicule.

Par exemple, le dispositif de marchepied comprend au moins une portion d'absorption de choc s'étendant verticalement vers le bas à partir d'un côté avant de l'embase.

La portion d'absorption de choc est, par exemple, située du côté de la première portion de fixation au longeron.

Selon un mode de réalisation, le véhicule automobile tel que décrit précédemment comprend un longeron droit et un longeron gauche s'étendant selon un axe longitudinal, une doublure droite reliée au longeron droit par un premier élément de liaison transversal, et une doublure gauche reliée au longeron gauche par un deuxième élément de liaison transversal, le véhicule comprenant un premier dispositif de marchepied droit tel que décrit précédemment soudé directement au longeron droit et au premier élément de liaison transversal, et un deuxième dispositif de marchepied gauche tel que décrit précédemment soudé directement au longeron gauche et au deuxième élément de liaison transversal.

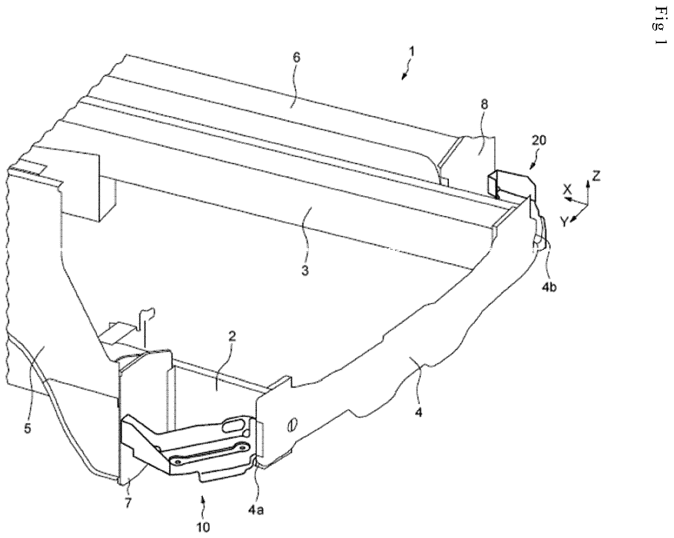

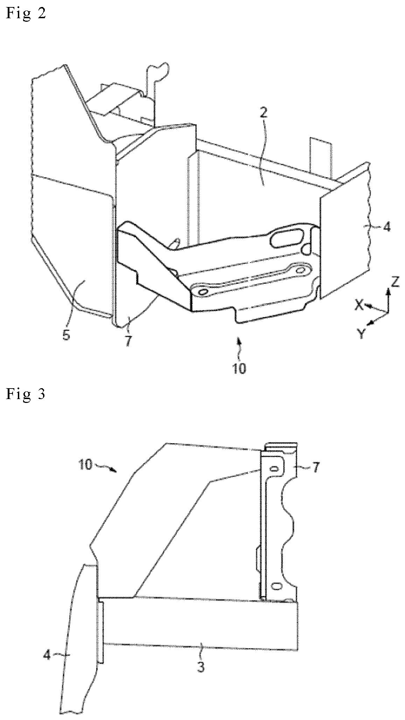

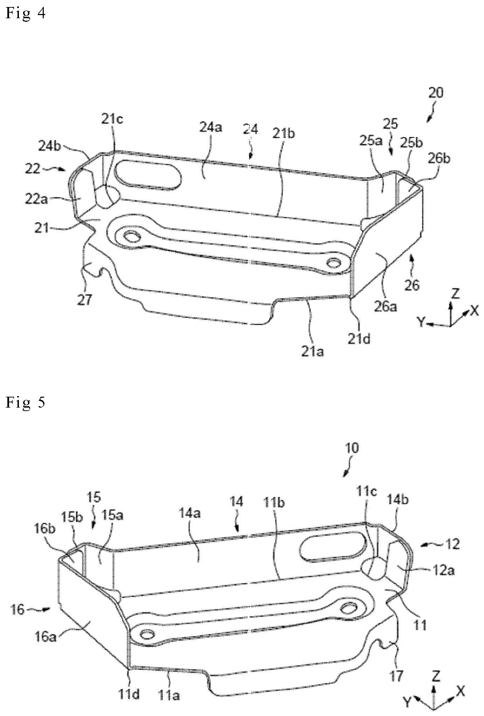

D'autres buts, caractéristiques et avantages de l'invention apparaîtront à la lecture de la description suivante, donnée uniquement à titre d'exemple non limitatif, et faite en référence aux dessins annexés sur lesquels :
[Fig.1]
   illustre, en perspective, une partie avant d'un véhicule automobile comprenant un dispositif de marchepied droit et un dispositif de marchepied gauche selon un mode de réalisation de l'invention ;
[Fig.2]
   représente en détails le dispositif de marchepied droit de la figure 1 ;
[Fig.3]
   représente une vue de dessus du dispositif le marchepied droit de la figure 2 ;
[Fig.4]
   représente en perspective le dispositif de marchepied gauche de la figure 1 ;
[Fig.5]
   représente en perspective le dispositif de marchepied droit de la figure 1 ;
[Fig.6]
   est une vue de dessus du représente du dispositif de marchepied gauche de la figure 4 ; et
[Fig.7]
   représente en perspective le dispositif de marchepied droit selon un autre mode de réalisation.

Dans la description qui suit, les termes « longitudinal », « transversal », « vertical », « avant », « arrière », « gauche » et « droite » sont définis selon le repère orthogonal habituel des véhicules à moteur, représenté sur les dessins, et qui comprend :
- un axe longitudinal X, horizontal et orienté de l'avant vers l'arrière du véhicule ;
- un axe transversal Y, horizontal, perpendiculaire à l'axe longitudinal X et orienté de la gauche vers la droite du véhicule quand le véhicule avance ;
- un axe vertical Z, orthogonal aux axes longitudinal et transversal X et Y et dirigé de bas en haut.

Sur la figure 1, on a représenté de manière très schématique une partie avant d'un véhicule automobile, référencée 1 dans son ensemble 1, comprenant un longeron droit 2 et un longeron gauche 3 s'étendant selon l'axe longitudinal X et une traverse avant 4 s'étendant transversalement selon l'axe transversal Y entre lesdits longerons 2, 3.

Les extrémités latérales 4a, 4b de la traverse avant 4 sont fixées chacun à un des longerons droit ou gauche 2, 3, par exemple par des moyens de visserie (non référencés).

La traverse avant 4 est destinée à supporter un élément de carrosserie, notamment un bouclier avant (non représenté), dans lequel sont ménagées deux cavités latérales délimitées par une paroi inférieure formant un appui pour le pied de l'utilisateur.

La carrosserie du véhicule 1 comprend en outre une doublure droite 5 et une doublure gauche 6 s'étendant selon l'axe longitudinal X et reliée chacune par un élément de liaison 7, 8 respectivement au longeron droit 2 et au longeron gauche 3.

Les éléments de liaison 7, 8 s'étendent transversalement ente le longeron correspondant 2, 3 et la doublure correspondante 5, 6.

Le véhicule 1 comprend en outre un dispositif de marchepied droit 10 fixé entre le longeron droit 2 et l'élément de liaison droit 7 à la doublure droite 5.

Le véhicule 1 comprend en outre un dispositif de marchepied gauche 20 fixé entre le longeron gauche 3 et l'élément de liaison gauche 8 à la doublure gauche 6.

Le dispositif de marchepied droit 10 et le dispositif de marchepied gauche 20 sont situé sous la paroi inférieure du bouclier avant formant un appui pour le pied de l'utilisateur.

Le dispositif de marchepied droit 10 et le dispositif de marchepied gauche 20 sont symétriques l'un par rapport à l'autre par rapport à un plan médian du véhicule.

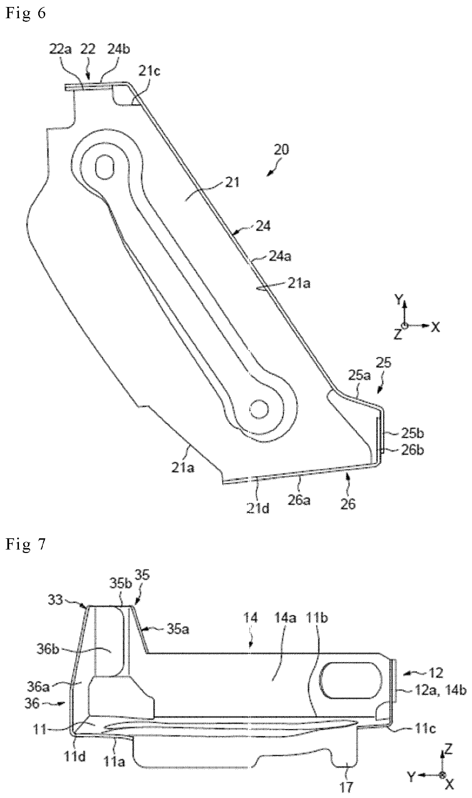

En variante, on pourrait prévoir que le dispositif de marchepied droit 10 et le dispositif de marchepied gauche 20 ne soient pas symétriques, tel que le marchepied droit 30 illustré sur la figure 7.

Le dispositif de marchepied gauche 20, illustré en détails sur les figures 4 et 6, comprend une embase 21 s'étendant selon un plan comprenant l'axe transversal Y et l'axe longitudinal X.

L'embase 21 s'étendant selon un axe orienté à 30° par rapport à l'axe longitudinal X et est délimité par un côté avant 21a, un côté arrière 21b, un côté latéral interne 21c et un côté latéral externe 21d.

Le dispositif de marchepied gauche 20 comprend en outre une première portion 22 de fixation au longeron avant gauche 3 et une deuxième portion 23 de fixation à l'élément de liaison 8 de la doublure avant gauche 6.

La première portion 22 de fixation au longeron avant gauche 3 comprend une première patte de fixation verticale 22a s'étendant verticalement vers le haut depuis le côté latéral interne 21c.

Le dispositif de marchepied gauche 20 comprend en outre un renfort arrière 24 comprenant une portion centrale 24a s'étendant verticalement vers le haut depuis le côté arrière 21b de l'embase 21 et deux pattes latérales 24b, 25 s'étendant respectivement depuis chaque extrémité latérale opposée de la portion centrale 24a.

La patte latérale interne 24b s'étend depuis une extrémité latérale interne de la portion centrale 24a selon un axe longitudinal vers la première patte de fixation verticale 22a.

Ladite patte latérale interne 24b et la première patte de fixation verticale 22a forment ensemble la première portion 22 de fixation au longeron avant gauche 3.

Ladite première portion 22 de fixation au longeron avant gauche 3 est soudée via la patte latérale interne 24b et la première patte de fixation verticale 22a directement au longeron gauche 3, c'est-à-dire sans interface supplémentaire.

La patte latérale externe 25 du renfort arrière 24 comprend une première partie 25a s'étendant à partir d'une extrémité latérale externe de la portion centrale 24a de manière oblique vers l'arrière du véhicule, par exemple selon un angle compris entre 100° et 145° par rapport à l'axe de ladite portion centrale 24a, par exemple égal à 120°.

La patte latérale externe 25 du renfort arrière 24 comprend une deuxième partie 25b s'étendant depuis la première portion 25a selon l'axe transversal vers l'extérieur.

Le dispositif de marchepied gauche 20 comprend en outre un renfort latéral 26 comprenant une patte externe 26a s'étendant verticalement depuis un côté latéral 21d de l'embase et une patte de liaison 26b s'étendant depuis la patte externe 26a selon l'axe transversal Y vers l'intérieur.

La deuxième partie 25b de la patte latérale externe 25 du renfort arrière 24 et la patte de liaison 26b du renfort latéral 26 forment ensemble la deuxième portion 23 de fixation à l'élément de liaison 8 de la doublure avant gauche 6.

Ladite deuxième portion 23 de fixation à l'élément de liaison 8 de la doublure avant gauche 6 est soudée via la patte de liaison 26b et la deuxième partie 25b de la patte latérale externe 25 directement à l'élément de liaison 8 de la doublure avant gauche 6, c'est-à-dire sans interface supplémentaire.

La fixation par soudure directement au soubassement de la caisse du véhicule automobile, i.e. le longeron et un élément de liaison à la doublure avant, permet de réduire les coûts de fabrication par rapport aux solutions vissées sur la traverse extrême avant.

De plus, grâce au renfort arrière 24 et au renfort latéral 26, les efforts en cas de choc latéral extérieur sont transmis à la doublure gauche 6.

Le dispositif de marchepied gauche 20 comprend en outre une portion 27 d'absorption de choc s'étendant verticalement vers le bas à partir du côté avant 21a de l'embase 21.

La portion 27 d'absorption de choc est située du côté de la première portion 22 de fixation au longeron gauche 3.

Le dispositif de marchepied droit 10, illustré en détails sur la figure 5, comprend une embase 11 s'étendant selon un plan comprenant l'axe transversal Y et l'axe longitudinal X.

L'embase 11 s'étendant selon un axe orienté à 30° par rapport à l'axe longitudinal X et est délimité par un côté avant 11a, un côté arrière 11b, un côté latéral interne 11c et un côté latéral externe 11d.

Le dispositif de marchepied droit 10 comprend en outre une première portion 12 de fixation au longeron avant droit 2 et une deuxième portion 13 de fixation à l'élément de liaison 7 de la doublure avant droite 5.

La première portion 12 de fixation au longeron avant droit 2 comprend une première patte de fixation verticale 12a s'étendant verticalement vers le haut depuis le côté latéral interne 11c.

Le dispositif de marchepied droit 10 comprend en outre un renfort arrière 14 comprenant une portion centrale 14a s'étendant verticalement vers le haut depuis le côté arrière 11b de l'embase 11 et deux pattes latérales 14b, 15 s'étendant respectivement depuis chaque extrémité latérale opposée de la portion centrale 14a.

La patte latérale interne 14b s'étend depuis une extrémité latérale interne de la portion centrale 14a selon un axe longitudinal vers la première patte de fixation verticale 12a.

Ladite patte latérale interne 14b et la première patte de fixation verticale 12a forment ensemble la première portion 12 de fixation au longeron avant droit 2.

Ladite première portion 12 de fixation au longeron avant droit 2 est soudée via la patte latérale interne 14b et la première patte de fixation verticale 12a directement au longeron droit 2, c'est-à-dire sans interface supplémentaire.

La patte latérale externe 15 du renfort arrière 14 comprend une première partie 15a s'étendant à partir d'une extrémité latérale externe de la portion centrale 14a de manière oblique vers l'arrière du véhicule, par exemple selon un angle compris entre 100° et 145° par rapport à l'axe de ladite portion centrale 14a, par exemple égal à 120°.

La patte latérale externe 15 du renfort arrière 14 comprend une deuxième partie 15b s'étendant depuis la première portion 15a selon l'axe transversal vers l'extérieur.

Le dispositif de marchepied droit 10 comprend en outre un renfort latéral 16 comprenant une patte externe 16a s'étendant verticalement depuis un côté latéral 11d de l'embase et une patte de liaison 16b s'étendant depuis la patte externe 16a selon l'axe transversal Y vers l'intérieur.

La deuxième partie 15b de la patte latérale externe 15 du renfort arrière 14 et la patte de liaison 16b du renfort latéral 16 forment ensemble la deuxième portion 13 de fixation à l'élément de liaison 7 de la doublure avant droite 5.

Ladite deuxième portion 13 de fixation à l'élément de liaison 7 de la doublure avant droite 5 est soudée via la patte de liaison 16b et la deuxième partie 15b de la patte latérale externe 15 directement à l'élément de liaison 7 de la doublure avant droite 5, c'est-à-dire sans interface supplémentaire.

La fixation par soudure directement au soubassement de la caisse du véhicule automobile, i.e. le longeron et un élément de liaison à la doublure avant, permet de réduire les coûts de fabrication par rapport aux solutions vissées sur la traverse extrême avant.

De plus, grâce au renfort arrière 14 et au renfort latéral 16, les efforts en cas de choc latéral extérieur sont transmis à la doublure droite 5.

Le dispositif de marchepied droit 10 comprend en outre une portion 17 d'absorption de choc s'étendant verticalement vers le bas à partir du côté avant 11a de l'embase 11.

La portion 17 d'absorption de choc est située du côté de la première portion 12 de fixation au longeron droit 2.

Le dispositif de marchepied gauche 20 et le dispositif de marchepied droit 10 sont réalisés en tôle métallique embouties et pliées.

L'épaisseur de la tôle de chacun des dispositifs de marchepied est comprise entre 1mm et 3mm, par exemple égale à 2mm.

Les dispositifs de marchepied 10, 20 permettent de préserver l'intégrité de la structure du véhicule en cas d'un choc extérieur arrivant selon un angle compris entre 10° et 45°, par exemple égal à 30°, comme visible sur la figure 3.

Le mode de réalisation illustré sur la figure 7, dans lequel les mêmes éléments portent les mêmes références, diffère du mode de réalisation illustré sur la figure 5, uniquement par le fait que la forme de la deuxième portion de fixation du dispositif de marchepied droit 10 à l'élément de liaison 7 de la doublure avant droite 5.

Tel qu'illustré, le renfort arrière 14 comprend une patte latérale externe 35 comprenant une première partie 35a s'étendant à partir d'une extrémité latérale externe de la portion centrale 14a de manière oblique vers l'arrière et vers le haut du véhicule.

La patte latérale externe 35 du renfort arrière 14 comprend une deuxième partie 35b s'étendant depuis la première portion 35a selon l'axe transversal vers l'extérieur.

Le dispositif de marchepied droit 10 comprend en outre un renfort latéral 36 comprenant une patte externe 36a s'étendant verticalement et de manière oblique vers l'arrière et vers le haut du véhicule depuis un côté latéral 11d de l'embase 11 et une patte de liaison 36b s'étendant depuis la patte externe 36a selon l'axe transversal Y vers l'intérieur.

La deuxième partie 35b de la patte latérale externe 35 du renfort arrière 14 et la patte de liaison 36b du renfort latéral 36 forment ensemble la deuxième portion 33 de fixation du dispositif de marchepied droit 10 à l'élément de liaison 7 de la doublure avant droite 5.

Ladite deuxième portion 33 de fixation à l'élément de liaison 7 de la doublure avant droite 5 est soudée via la patte de liaison 36b et la deuxième partie 35b de la patte latérale externe 35 directement à l'élément de liaison 7 de la doublure avant droite 5, c'est-à-dire sans interface supplémentaire.

On pourrait supposer que l'un ou l'autre du dispositif de marchepied droit ou gauche comprennent l'une ou l'autre des variantes proposées.

Les dispositifs de marchepied pourraient également ne pas être symétriques.

Grace à l'invention, les marchepieds décrits permettent à l'utilisateur de prendre appui pour accéder au parebrise, mais également d'assurer la protection des éléments de la structure du véhicule contre les chocs latéraux avant.

## Revendications

1. Véhicule automobile (1) comprenant au moins un longeron (2, 3) longitudinal s'étendant selon un axe longitudinal (X) et une doublure (5, 6) reliée au longeron par un élément de liaison transversal (7, 8), **caractérisé en ce qu'**il comprend au moins un dispositif de marchepied (10, 20) soudé directement au longeron (2, 3) longitudinal et à l'élément de liaison transversal (7, 8).

2. Véhicule automobile (1) selon la revendication 1, dans lequel le dispositif de marchepied (10, 20) comprend une embase (11, 21) s'étendant selon un axe compris entre 20° et 45°, de préférence égal à 30° par rapport à l'axe longitudinal (X).

3. Véhicule automobile (1) selon la revendication 2, dans lequel le dispositif de marchepied (10, 20) comprend une première patte de fixation verticale (12a, 22a) s'étendant selon un axe vertical (Z) depuis un côté latéral interne (11c, 21c) de l'embase (11, 21).

4. Véhicule automobile (1) selon la revendication 3, dans lequel le dispositif de marchepied (10, 20) comprend un renfort arrière (14, 24) comprenant une portion centrale (14a, 24a) s'étendant selon un axe vertical (Z) depuis un côté arrière (11b, 21b) de l'embase (11, 21) et au moins une première patte latérale (14b, 24b) s'étendant depuis une extrémité latérale interne de la portion centrale (14a, 24a) du renfort arrière (14, 24) selon l'axe longitudinal (X) vers la première patte de fixation verticale (12a, 22a).

5. Véhicule automobile (1) selon les revendications 3 et 4, dans lequel la patte latérale interne (14b, 24b) et la première patte de fixation verticale (12a, 22a) forment ensemble une première portion (12, 22) de fixation au longeron longitudinal (2, 3), ladite première portion (12, 22) de fixation au longeron (2, 3) étant soudée via la patte latérale interne (14b, 24b) et la première patte de fixation verticale (12a, 22a) directement au longeron (2, 3).

6. Véhicule automobile (1) selon l'une quelconque des revendications 4 à 5, dans lequel le renfort arrière (14, 24) comprend une deuxième patte latérale (15, 25, 35) comprenant une première partie (15a, 25a, 35a) s'étendant à partir d'une extrémité latérale externe de la portion centrale (14a, 24a) du renfort (14, 24) de manière oblique au moins vers l'arrière du véhicule et une deuxième partie (15b, 25b, 35b) s'étendant depuis la première portion (15a, 25a, 35a) selon un axe transversal (Y) vers l'extérieur.

7. Véhicule automobile (1) selon la revendication 6, dans lequel le dispositif de marchepied (10, 20) comprend en outre un renfort latéral (16, 26, 36) comprenant une patte externe (16a, 26a, 36a) s'étendant depuis un côté latéral (11d, 21d) de l'embase au moins selon l'axe verticale (Z) et une patte de liaison (16b, 26b, 36b) s'étendant depuis la patte externe (16a, 26a, 36b) selon l'axe transversal (Y) vers le longeron (2, 3), la deuxième partie (15b, 25b, 35b) de la patte latérale externe (15, 25, 35) du renfort arrière (14, 24) et la patte de liaison (16b, 26b, 36b) du renfort latéral (16, 26, 36) forment ensemble une deuxième portion (13, 23, 33) de fixation à l'élément de liaison (7, 8) de la doublure avant (5, 6), ladite deuxième portion (13, 25, 33) de fixation étant soudée via la patte de liaison (16b, 26b, 36b) et la deuxième partie (15b, 25b, 35b) directement à l'élément de liaison (7, 8) de la doublure avant (5, 6).

8. Véhicule automobile (1) selon la revendication 7, dans lequel la première partie (35a) de la patte latérale externe (35) du renfort arrière (14) s'étend de manière oblique vers l'arrière et vers le haut du véhicule et dans lequel la patte externe (36a) du renfort latéral (36) s'étend verticalement et de manière oblique vers l'arrière et vers le haut du véhicule.

9. Véhicule automobile (1) selon l'une quelconque des revendications 2 à 8, dans lequel le dispositif de marchepied (10, 20) comprend au moins une portion (17, 27) d'absorption de choc s'étendant verticalement vers le bas à partir d'un côté avant (21a) de l'embase (21).

10. Véhicule automobile (1) selon la revendication 9 en combinaison avec la revendication 5, dans lequel la portion (17, 27) d'absorption de choc est située du côté de la première portion (12, 22) de fixation au longeron (2, 3).

11. Véhicule automobile (1) selon l'une quelconque des revendications précédentes, comprend un longeron droit (2) et un longeron gauche (3) s'étendant selon un axe longitudinal (X), une doublure droite (5) reliée au longeron droit (2) par un premier élément de liaison transversal (7), et une doublure gauche (6) reliée au longeron gauche (3) par un deuxième élément de liaison transversal (8), le véhicule comprenant un premier dispositif de marchepied (10) soudé directement au longeron droit (2) et au premier élément de liaison transversal (7), et un deuxième dispositif de marchepied (20) soudé directement au longeron gauche (3) et au deuxième élément de liaison transversal (8).

## Patentansprüche

1. Kraftfahrzeug (1), welches mindestens einen Längsträger (2, 3), der sich entlang einer Längsachse (X) erstreckt, und eine Verkleidung (5, 6), die mit dem Längsträger durch ein Querverbindungselement (7, 8) verbunden ist, umfasst, **dadurch gekennzeichnet, dass** es mindestens eine Trittbrettvorrichtung (10, 20) umfasst, die direkt an den Längsträger (2, 3) und an das Querverbindungselement (7, 8) angeschweißt ist.

2. Kraftfahrzeug (1) nach Anspruch 1, wobei die Trittbrettvorrichtung (10, 20) ein Unterteil (11, 21) umfasst, das sich entlang einer Achse erstreckt, die in einem Winkel zwischen 20° und 45°, vorzugsweise von 30°, bezüglich der Längsachse (X) verläuft.

3. Kraftfahrzeug (1) nach Anspruch 2, wobei die Trittbrettvorrichtung (10, 20) eine erste vertikale Befestigungslasche (12a, 22a) umfasst, die sich von einer inneren lateralen Seite (11c, 21c) des Unterteils (11, 21) aus entlang einer vertikalen Achse (Z) erstreckt.

4. Kraftfahrzeug (1) nach Anspruch 3, wobei die Trittbrettvorrichtung (10, 20) eine hintere Verstärkung (14, 24) umfasst, die einen mittleren Abschnitt (14a, 24a), der sich von einer hinteren Seite (11b, 21b) des Unterteils (11, 21) aus entlang einer vertikalen Achse (Z) erstreckt, und mindestens eine erste seitliche Lasche (14b, 24b), die sich von einem inneren seitlichen Ende des mittleren Abschnitts (14a, 24a) der hinteren Verstärkung (14, 24) aus entlang der Längsachse (X) zu der ersten vertikalen Befestigungslasche (12a, 22a) hin erstreckt, umfasst.

5. Kraftfahrzeug (1) nach den Ansprüchen 3 und 4, wobei die innere seitliche Lasche (14b, 24b) und die erste vertikale Befestigungslasche (12a, 22a) zusammen einen ersten Abschnitt (12, 22) zur Befestigung am Längsträger (2, 3) bilden, wobei dieser erste Abschnitt (12, 22) zur Befestigung am Längsträger (2, 3) über die innere seitliche Lasche (14b, 24b) und die erste vertikale Befestigungslasche (12a, 22a) direkt an den Längsträger (2, 3) angeschweißt ist.

6. Kraftfahrzeug (1) nach einem der Ansprüche 4 bis 5, wobei die hintere Verstärkung (14, 24) eine zweite seitliche Lasche (15, 25, 35) umfasst, die einen ersten Teil (15a, 25a, 35a) umfasst, der sich von einem äußeren seitlichen Ende des mittleren Abschnitts (14a, 24a) der Verstärkung (14, 24) aus schräg wenigstens zum hinteren Teil des Fahrzeugs hin erstreckt, und einen zweiten Teil (15b, 25b, 35b), der sich vom ersten Abschnitt (15a, 25a, 35a) aus entlang einer Querachse (Y) nach außen erstreckt.

7. Kraftfahrzeug (1) nach Anspruch 6, wobei die Trittbrettvorrichtung (10, 20) außerdem eine seitliche Verstärkung (16, 26, 36) umfasst, die eine äußere Lasche (16a, 26a, 36a), die sich von einer lateralen Seite (11d, 21d) des Unterteils aus wenigstens entlang der vertikalen Achse (Z) erstreckt, und eine Verbindungslasche (16b, 26b, 36b), die sich von der äußeren Lasche (16a, 26a, 36a) aus entlang der Querachse (Y) zum Längsträger (2, 3) hin erstreckt, umfasst, wobei der zweite Teil (15b, 25b, 35b) der äußeren seitlichen Lasche (15, 25, 35) der hinteren Verstärkung (14, 24) und die Verbindungslasche (16b, 26b, 36b) der seitlichen Verstärkung (16, 26, 36) zusammen einen zweiten Abschnitt (13, 23, 33) zur Befestigung an dem Verbindungselement (7, 8) der vorderen Verkleidung (5, 6) bilden, wobei dieser zweite Befestigungsabschnitt (13, 23, 33) über die Verbindungslasche (16b, 26b, 36b) und den zweiten Teil (15b, 25b, 35b) direkt an das Verbindungselement (7, 8) der vorderen Verkleidung (5, 6) angeschweißt ist.

8. Kraftfahrzeug (1) nach Anspruch 7, wobei sich der erste Teil (35a) der äußeren seitlichen Lasche (35) der hinteren Verstärkung (14) schräg zum hinteren Teil und zum oberen Teil des Fahrzeugs hin erstreckt, und wobei sich die äußere Lasche (36a) der seitlichen Verstärkung (36) vertikal und schräg zum hinteren Teil und zum oberen Teil des Fahrzeugs hin erstreckt.

9. Kraftfahrzeug (1) nach einem der Ansprüche 2 bis 8, wobei die Trittbrettvorrichtung (10, 20) mindestens einen Stoßdämpfungsabschnitt (17, 27) umfasst, der sich von einer Vorderseite (21a) des Unterteils (21) aus vertikal nach unten erstreckt.

10. Kraftfahrzeug (1) nach Anspruch 9 in Kombination mit Anspruch 5, wobei sich der Stoßdämpfungsabschnitt (17, 27) auf der Seite des ersten Abschnitts (12, 22) zur Befestigung am Längsträger (2, 3) befindet.

11. Kraftfahrzeug (1) nach einem der vorhergehenden Ansprüche, welches einen rechten Längsträger (2) und einen linken Längsträger (3), die sich entlang einer Längsachse (X) erstrecken, eine rechte Verkleidung (5), die mit dem rechten Längsträger (2) durch ein erstes Querverbindungselement (7) verbunden ist, und eine linke Verkleidung (6), die mit dem linken Längsträger (3) durch ein zweites Querverbindungselement (8) verbunden ist, umfasst, wobei das Fahrzeug eine erste Trittbrettvorrichtung (10), die direkt an den rechten Längsträger (2) und an das erste Querverbindungselement (7) angeschweißt ist, und eine zweite Trittbrettvorrichtung (20), die direkt an den linken Längsträger (3) und an das zweite Querverbindungselement (8) angeschweißt ist, umfasst.

## Claims

1. Motor vehicle (1) comprising at least one longitudinal side rail (2, 3) extending along a longitudinal axis (X) and a liner (5, 6) connected to the side rail by a transverse connecting element (7, 8), **characterized in that** it comprises at least one running board device (10, 20) welded directly to the longitudinal side rail (2, 3) and to the transverse connecting element (7, 8).

2. Motor vehicle (1) according to Claim 1, in which the running board device (10, 20) comprises a base (11, 21) extending along an axis at an angle between 20° and 45°, preferably equal to 30°, relative to the longitudinal axis (X).

3. Motor vehicle (1) according to Claim 2, in which the running board device (10, 20) comprises a first vertical fixing lug (12a, 22a) extending along a vertical axis (Z) from an internal lateral side (11c, 21c) of the base (11, 21).

4. Motor vehicle (1) according to Claim 3, in which the running board device (10, 20) comprises a rear reinforcement (14, 24) comprising a central portion (14a, 24a) extending along a vertical axis (Z) from a rear side (11b, 21b) of the base (11, 21) and at least one first lateral lug (14b, 24b) extending from an internal lateral edge of the central portion (14a, 24a) of the rear reinforcement (14, 24) along the longitudinal axis (X) toward the first vertical fixing lug (12a, 22a).

5. Motor vehicle (1) according to Claims 3 and 4, in which the internal lateral lug (14b, 24b) and the first vertical fixing lug (12a, 22a) together form a first portion (12, 22) to be fixed to the longitudinal side rail (2, 3), said first portion (12, 22) to be fixed to the side rail (2, 3) being directly welded by means of the internal lateral lug (14b, 24b) and the first vertical fixing lug (12a, 22a) to the side rail (2, 3).

6. Motor vehicle (1) according to either one of Claims 4 and 5, in which the rear reinforcement (14, 24) comprises a second lateral lug (15, 25, 35) comprising a first part (15a, 25a, 35a) extending obliquely from an external lateral edge of the central portion (14a, 24a) of the reinforcement (14, 24) at least toward the rear of the vehicle and a second part (15b, 25b, 35b) extending outward from the first portion (15a, 25a, 35a) along a transverse axis (Y).

7. Motor vehicle (1) according to Claim 6, in which the running board device (10, 20) further comprises a lateral reinforcement (16, 26, 36) comprising an external lug (16a, 26a, 36a) extending from a lateral side (11d, 21d) of the base at least along the vertical axis (Z) and a connecting lug (16b, 26b, 36b) extending from the external lug (16a, 26a, 36b) along the transverse axis (Y) toward the side rail (2, 3), the second part (15b, 25b, 35b) of the external lateral lug (15, 25, 35) of the rear reinforcement (14, 24) and the connecting lug (16b, 26b, 36b) of the lateral reinforcement (16, 26, 36) together forming a second portion (13, 23, 33) to be fixed to the connecting element (7, 8) of the front liner (5, 6), said second portion (13, 23, 33) to be fixed being directly welded by means of the connecting lug (16b, 26b, 36b) and the second part (15b, 25b, 35b) to the connecting element (7, 8) of the front liner (5, 6).

8. Motor vehicle (1) according to Claim 7, in which the first part (35a) of the external lateral lug (35) of the rear reinforcement (14) extends obliquely toward the rear and toward the top of the vehicle and in which the external lug (36a) of the lateral reinforcement (36) extends vertically and obliquely toward the rear and toward the top of the vehicle.

9. Motor vehicle (1) according to any one of Claims 2 to 8, in which the running board device (10, 20) comprises at least one shock absorbing portion (17, 27) extending vertically downward from a front side (21a) of the base (21).

10. Motor vehicle (1) according to Claim 9 in combination with Claim 5, in which the shock absorbing portion (17, 27) is situated on the same side as the first portion (12, 22) to be fixed to the side rail (2, 3).

11. Motor vehicle (1) according to any one of the preceding claims, comprising a righthand side rail (2) and a lefthand side rail (3) extending along a longitudinal axis (X), a righthand liner (5) connected to the righthand side rail (2) by a first transverse connecting element (7), and a lefthand liner (6) connected to the lefthand side rail (3) by a second transverse connecting element (8), the vehicle comprising a first running board device (10) welded directly to the righthand side rail (2) and to the first transverse connecting element (7) and a second running board device (20) welded directly to the lefthand side rail (3) and to the second transverse connecting element (8).
